(19) Europäisches Patentamt / European Patent Office / Office européen des brevets

(11) **EP 3 919 186 A1**

(12) **EUROPEAN PATENT APPLICATION**
published in accordance with Art. 153(4) EPC

(43) Date of publication:
**08.12.2021 Bulletin 2021/49**

(51) Int Cl.:
**B05D 1/36** (2006.01) **B05D 5/06** (2006.01)
**B32B 7/023** (2019.01)

(21) Application number: **19913147.5**

(22) Date of filing: **18.12.2019**

(86) International application number:
**PCT/JP2019/049589**

(87) International publication number:
**WO 2020/158222 (06.08.2020 Gazette 2020/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **01.02.2019 JP 2019016589**
**24.05.2019 JP 2019097385**

(71) Applicant: **Kansai Paint Co., Ltd**
**Amagasaki-shi, Hyogo 661-8555 (JP)**

(72) Inventors:
• **OKAZAKI, Hirokazu**
  **Hiratsuka-shi,**
  **Kanagawa 254-8562 (JP)**
• **NARITA, Nobuhiko**
  **Hiratsuka-shi,**
  **Kanagawa 254-8562 (JP)**

(74) Representative: **Müller-Boré & Partner**
**Patentanwälte PartG mbB**
**Friedenheimer Brücke 21**
**80639 München (DE)**

(54) **MULTI-LAYER COATING FILM AND MULTI-LAYER COATING FILM FORMATION METHOD**

(57) Provided is a multilayer coating film comprising a colored base coating film and an effect base coating film formed on the colored base coating film, wherein the hue angle h in the L*C*h color space diagram is within the range of 30° to 70°, and when the following formulas hold: $X = [(C*45)^2+(C*75)^2]^{1/2}$, and $Y = [(L*15)^2+(C*15)^2]^{1/2}+[(L*25)^2+(C*25)^2]^{1/2}$, X is 80 or more and Y is 140 or more; provided that C*15, C*25, C*45, and C*75 represent the chroma of the multilayer coating film when light is illuminated at an angle of 45 degrees and received at angles of 15 degrees, 25 degrees, 45 degrees, and 75 degrees deviated from the specular reflection light in the incident light direction, and L*15 and L*25 similarly represent the lightness of the multilayer coating film.

Fig. 1

EP 3 919 186 A1

**Description**

Technical Field

Cross-Reference to Related Applications

The present application claims priority to Japanese Patent Application No. 2019-016589 filed on February 1, 2019, and Japanese Patent Application No. 2019-097385 filed on May 24, 2019, the entire contents of which are incorporated herein by reference.

The present invention relates to a multilayer coating film comprising a colored base coating film and an effect base coating film formed on the colored base coating film.

Background Art

The purpose of applying paints is mainly to protect materials, and impart an excellent appearance. For industrial products, excellent appearance, particularly "color and texture," is important in terms of enhancing their product power. Although there are various textures for industrial products desired by consumers, a vivid, bright color with pearl luster has recently been desired in the field of automobile exterior panels, automobile components, home appliances, and the like.

For example, PTL 1 discloses a method for forming an effect multilayer coating film having a reddish to yellowish hue on a substrate, the method comprising applying a color base paint to the substrate to form a color base coating film, applying an effect paint to the color base coating film to form an effect coating film, and applying a top clear paint to the effect coating film to form a top clear coating film; wherein the interference color in a highlight portion of the effect coating film and the color of the color base coating film are similar colors in the range of 10RP to 10Y in the Munsell hue.

Citation List

Patent Literature
PTL 1: JP2006-289247A

Summary of Invention

Technical Problem

The coating films obtained in PTL 1 are poor in vividness and brightness, even if they are warm yellow to red coating films.
An object of the present invention is to provide a more vivid, bright, particularly orange-pearlescent multilayer coating film and a method for forming the multilayer coating film.

Solution to Problem

The present invention includes the subject matter described in the following items.
Item 1. A multilayer coating film comprising a colored base coating film and an effect base coating film formed on the colored base coating film,

wherein the hue angle h in the L*C*h color space diagram is within the range of 30° to 70°, and
when the following formulas hold:

$$X = [(C^*45)^2+(C^*75)^2]^{1/2},$$

and

$$Y = [(L^*15)^2+(C^*15)^2]^{1/2}+[(L^*25)^2+(C^*25)^2]^{1/2},$$

X is 80 or more and Y is 140 or more;
provided that C*15, C*25, C*45, and C*75 represent the chroma of the multilayer coating film when light is illuminated at an angle of 45 degrees and received at angles of 15 degrees, 25 degrees, 45 degrees, and 75 degrees deviated from the specular reflection light in the incident light direction,

h represents the hue of the multilayer coating film when light is illuminated at an angle of 45 degrees and received at an angle of 45 degrees deviated from the specular reflection light in the incident light direction, and

L*15 and L*25 represent the lightness of the multilayer coating film when light is illuminated at an angle of 45 degrees and received at angles of 15 degrees and 25 degrees deviated from the specular reflection light in the incident light direction.

Item 2. The multilayer coating film according to Item 1, which has a Y5/Y15 ratio of 2.4 or more, wherein Y5 is a Y value representing luminance in the XYZ color space based on the spectral reflectance of light illuminated at an angle of 45 degrees and received at an angle of 5 degrees deviated from the specular reflection light in the incident light direction, and Y15 is a Y value representing luminance in the XYZ color space based on the spectral reflectance of light received at an angle of 15 degrees in the incident light direction.

Item 3. The multilayer coating film according to Item 1 or 2, wherein the measurement value of graininess (HG value) is 60 or less.

Item 4. The multilayer coating film according to any one of Items 1 to 3, wherein the effect base coating film comprises, as a solids content, 20 to 70 parts by mass of an interference pigment based on 100 parts by mass of the solids content of the effect base coating film.

Item 5. The multilayer coating film according to any one of Items 1 to 4, wherein the effect base coating film comprises, as a solids content, 15 parts by mass or less of a color pigment based on 100 parts by mass of the solids content of the effect base coating film.

Item 6. The multilayer coating film according to any one of Items 1 to 5, further comprising a clear coating film on the effect base coating film.

Item 7. An object comprising the multilayer coating film according to any one of Items 1 to 6.

Item 8. A method for forming a multilayer coating film, comprising the following steps (1) to (3):

(1) applying a colored base paint (X) to a substrate to form a colored base coating film;
(2) applying an effect base paint (Y) to the colored base coating film to form an effect base coating film; and
(3) heating the colored base coating film formed in step (1) and the effect base coating film formed in step (2) separately or simultaneously to cure the coating films,

wherein in the multilayer coating film, the hue angle h in the L*C*h color space diagram is within the range of 30° to 70°, and

when the following formulas hold:

$$X = [(C*45)^2 + (C*75)^2]^{1/2},$$

and

$$Y = [(L*15)^2 + (C*15)^2]^{1/2} + [(L*25)^2 + (C*25)^2]^{1/2},$$

X is 80 or more and Y is 140 or more.

Item 9. The method for forming a multilayer coating film according to Item 8, wherein the effect base paint (Y) comprises water, an interference pigment, a surface adjusting agent, and a rheology control agent.

Item 10. The method for forming a multilayer coating film according to Item 8 or 9, wherein the effect base paint (Y) comprises, as a solids content, 20 to 70 parts by mass of an interference pigment based on 100 parts by mass of the solids content of the effect base paint.

Item 11. The method for forming a multilayer coating film according to any one of Items 8 to 10, wherein the effect base coating film has a dry film thickness of 0.2 to 4.5 μm.

Advantageous Effects of Invention

According to the multilayer coating film of the present invention, a multilayer coating film that is a warm yellow to red coating film with more vivid, bright, particularly orange-pearlescent color is provided. Such a multilayer coating film can impart a vivid, bright appearance with excellent attractiveness to an object to which the multilayer coating film is applied.

Brief Description of Drawing

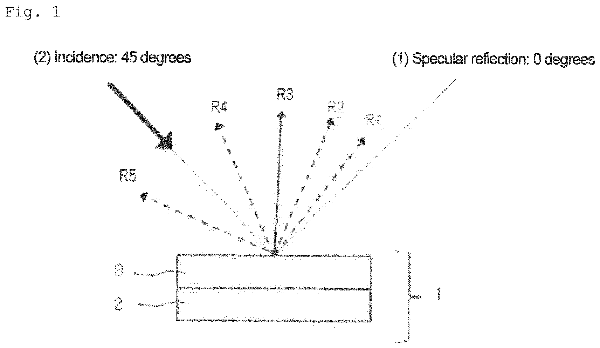

Fig. 1 is a drawing showing the structure of a coating film and gloss distribution due to variable angles.

Description of Embodiments

The multilayer coating film of the present invention is a multilayer coating film comprising a colored base coating film and an effect base coating film formed on the colored base coating film,

wherein the hue angle h in the L*C*h color space diagram is within the range of 30° to 70°, and
when the following formulas hold:

$$X = [(C*45)^2+(C*75)^2]^{1/2} \text{ (formula 1)},$$

and

$$Y = [(L*15)^2+(C*15)^2]^{1/2}+[(L*25)^2+(C*25)^2]^{1/2} \text{ (formula 2)},$$

X is 80 or more and Y is 140 or more.

The L*C*h color space referred to herein is a color space devised from the L*a*b* color space, which was standardized in 1976 by the Commission Internationale de l'Eclairage and also adopted in JIS Z 8729.
In the multilayer coating film of the present invention, the hue angle h in the L*C*h color space diagram is within the range of 30° to 70°. Thus, yellow to red, particularly orange multilayer coating films are included.
C*15, C*25, C*45, and C*75 represent the chroma of the multilayer coating film when light is illuminated at an angle of 45 degrees and received at angles of 15 degrees, 25 degrees, 45 degrees, and 75 degrees deviated from the specular reflection light in the incident light direction. C*15, C*25, C*45, and C*75 are defined as numerical values of chroma calculated from the spectral reflectance of light using a multi-angle spectrophotometer (trade name: MA-68II, produced by X-Rite Inc.).
L*15 and L*25 represent the lightness of the multilayer coating film when light is illuminated at an angle of 45 degrees and received at angles of 15 degrees and 25 degrees deviated from the specular reflection light in the incident light direction. L*15 and L*25 are defined as numerical values of lightness calculated from the spectral reflectance of light using a multi-angle spectrophotometer (trade name: MA-68II, produced by X-Rite Inc.).
"Highlight" means observation of the multilayer coating film from the vicinity of the specular reflection light, "bottom" means observation of the multilayer coating film at an angle that is not affected by the specular reflection light, and "face" means observation of the multilayer coating film at an angle in the middle of the highlight and the bottom.
As shown in Fig. 1, in the present application, in order to determine the optical properties of laminate 1 accurately from a smaller number of measured reflectances in the angular range from the highlight at 15 degrees with respect to specular reflection (1) to the bottom at 110 degrees with respect to specular reflection, the spectral reflectance of light received at angles of 15 degrees (R1), 25 degrees (R2), 45 degrees (R3), 75 degrees (R4), and 110 degrees (R5) with respect to specular reflection was measured using a multi-angle spectrophotometer (trade name: MA-68II, produced by X-Rite Inc.). Of these, the chroma values at 110° and 75° were not so different. Therefore, for chroma, measured spectral reflectance values at four different angles, 15 degrees (R1), 25 degrees (R2), 45 degrees (R3), and 75 degrees (R4), from the highlight to the face were used. For lightness, measured spectral reflectance values at two angles, 15 degrees (R1) and 25 degrees (R2), in the highlight were used. This figure shows a multilayer coating film 1 comprising a colored base layer 2 and an effect base layer 3 formed on the colored base layer 2.
X in formula 1 is an indicator of chroma expressed using, as variables, chroma C*45 in the face (45 degrees) and chroma C*75 in the bottom (75 degrees). A large X indicates a high chroma regardless of the angular change in the face and bottom. X can be an indicator of the chroma of a multilayer coating film in the face and bottom as perceived by an observer looking at the multilayer coating film.
If X is less than 80, the decrease in chroma in the range from the face to the bottom is large; thus, the target color of the multilayer coating film is observed to be dull.
Y in formula 2 is an indicator of chroma and lightness expressed using, as variables, chroma C*15 at 15 degrees, chroma C*25 at 25 degrees, lightness L*15 at 15 degrees, and lightness L*25 at 25 degrees. 15 degrees and 25 degrees are angles at which the reflectance changes rapidly in the highlight. Y can be an indicator combining the chroma and lightness of a multilayer coating film in the highlight as perceived by an observer looking at the multilayer coating film.

If Y is less than 140, the chroma and lightness in the highlight of the multilayer coating film are inferior.

When X is 80 or more, preferably 85 or more, and more preferably 90 or more, and Y is 140 or more, preferably 150 or more, and even more preferably 160 or more, it is possible to provide a multilayer coating film having high lightness in the highlight, and high chroma in a wide range from the highlight to the bottom.

The multilayer coating film of the present invention has a Y5/Y15 ratio of 2.4 or more, preferably 2.5 or more, and more preferably 2.6 or more, wherein Y5 is a Y value representing luminance in the XYZ color space based on the spectral reflectance of light illuminated at an angle of 45 degrees and received at an angle of 5 degrees deviated from the specular reflection light in the incident light direction, and Y15 is a Y value representing luminance in the XYZ color space based on the spectral reflectance of light received at an angle of 15 degrees in the incident light direction.

Y5 and Y15 are luminance values Y in the XYZ color space calculated based on the spectral reflectance of light using a GCMS-4 Goniometer (trade name, produced by Murakami Color Research Laboratory, Co., Ltd.).

The graininess is represented by a hi-light graininess value (hereinafter abbreviated as the "HG value"). The HG value is an indicator of microscopic brilliance obtained by microscopic observation, and indicates the graininess in the highlight (observation of the laminate from the vicinity of the specular reflection light against incident light). The HG value is calculated as follows. First, the coating film is photographed with a CCD camera at a light incidence angle of 15° and a receiving angle of 0°; and the obtained digital image data, i.e., two-dimensional luminance distribution data, are subjected to a two-dimensional Fourier transform to obtain a power spectrum image. Subsequently, only the spatial frequency area corresponding to graininess is extracted from the power spectrum image, and the obtained measurement parameter is converted to an HG value from 0 to 100 that has a linear relation with graininess. An HG value of "0" indicates no graininess, and an HG value of almost "100" indicates the highest possible graininess.

The multilayer coating film of the present invention preferably has an HG value of 60 or less, more preferably 58 or less, and even more preferably 55 or less. Thus, a multilayer coating film having low graininess and exhibiting a color with a delicate impression can be obtained. When the HG value exceeds 60, a multilayer coating film exhibiting a color with a delicate impression cannot be obtained, which is not preferable.

Structure of Each Coating Film of Multilayer Coating Film

Next, the structure of each coating film of the multilayer coating film of the present invention is described.

Colored Base Coating Film

The colored base coating film generally contains a resin component and a color pigment, and is formed by applying a colored base paint (X), preferably followed by drying.

The dry film thickness of the colored base coating film is preferably about 5.0 to 40 μm, more preferably 8.0 to 35 μm, and even more preferably about 10 to 30 μm, in terms of the high chroma and lightness in the excellent highlight of the multilayer coating film.

The colored base paint (X) preferably contains a resin component, a color pigment, and a medium comprising water and/or an organic solvent. The resin component generally contains a base resin and a curing agent, and known resins and/or compounds commonly used in this field can be used. Examples of the base resin include acrylic resins, polyester resins, epoxy resins, polyurethane resins, and the like. Examples of the curing agent include amino resins, polyisocyanate compounds, blocked polyisocyanate compounds, and the like.

The colored base paint (X) may be an aqueous paint or a solvent-based paint. From the standpoint of reducing the VOC of the paint, the colored base paint is preferably an aqueous paint. When the colored base paint is an aqueous paint, the base resin can be made soluble in water or dispersed in water by using a resin containing a hydrophilic group, such as a carboxyl group, a hydroxyl group, a methylol group, an amino group, a sulfonic acid group, or a polyoxyethylene group, most preferably a carboxyl group, in an amount sufficient for making the resin soluble in water or dispersed in water; and neutralizing the hydrophilic group.

The color pigment is not particularly limited. Specific examples include organic pigments, such as benzimidazolone pigments, pyrazolone pigments, azo pigments, quinacridone pigments, diketopyrrolopyrrole pigments, perylene pigments, perinone pigments, isoindoline pigments, isoindolinone pigments, metal chelate azo pigments, phthalocyanine pigments, indanthrone pigments, dioxazine pigments, threne pigments, and indigo pigments; composite oxide inorganic pigments, titanium white, carbon black pigments, and the like. These can be used singly or in a combination of two or more. In particular, yellow pigments, orange pigments, and red pigments can be preferably used.

The content of the color pigment as a solids content is preferably 5 to 50 parts by mass, and more preferably 10 to 40 parts by mass, based on 100 parts by mass of the resin solids content in the colored base paint (X), in terms of the high chroma and lightness in the highlight of the multilayer coating film to be obtained.

The colored base paint (X) contains a resin component and a color pigment, as described above, and may suitably contain an ultraviolet absorber, an antifoaming agent, a thickener, an organic solvent, a surface adjusting agent, a pigment other than the color pigment, or the like, if necessary.

Examples of pigments other than the color pigment include extender pigments, effect pigments, and the like. These pigments can be used singly or in a combination of two or more.

Examples of extender pigments include clay, kaolin, barium sulfate, barium carbonate, calcium carbonate, talc, silica, alumina white, and the like. Of these, barium sulfate and/or talc is preferably used. In particular, it is preferable to use barium sulfate with an average primary particle size of 1 μm or less, and more preferably 0.01 to 0.8 pm, as the extender pigment, in terms of obtaining a multilayer coating film having appearance with excellent smoothness.

In the present specification, the average primary particle size of barium sulfate is determined by observing barium sulfate using a scanning electron microscope, and averaging the maximum diameter of 20 barium sulfate particles on a straight line drawn at random on the electron microscope photograph (if there are more than 20 barium sulfate particles on the straight line drawn at random, then 20 particles selected at random from them).

When the colored base paint (X) contains an extender pigment, the amount thereof is preferably within the range of 0.1 to 30 parts by mass, and more preferably 0.1 to 20 parts by mass, based on 100 parts by mass of the resin solids content in the colored base paint.

The cured film thickness of the base coating film obtained from the colored base paint is preferably about 5.0 to 40 μm, more preferably 8.0 to 35 μm, and even more preferably about 10 to 30 μm, in terms of smoothness, metallic luster, and the like.

Coating of the colored base paint can be performed by a general method. For example, air spray coating, airless spray coating, rotary atomization coating, and like methods can be used. An electrostatic charge may be applied, if necessary, during coating of the colored base paint. In particular, rotary atomization electrostatic coating and air spray electrostatic coating are preferable, and rotary atomization electrostatic coating is particularly preferable.

When air spray coating, airless spray coating, or rotary atomization coating is performed, the colored base paint is preferably adjusted to have a solids content and viscosity suitable for coating by suitably adding water and/or an organic solvent; and optionally additives, such as rheology control agents and antifoaming agents.

The solids content of the colored base paint is preferably within the range of 10 to 60 mass%, more preferably 15 to 55 mass%, and even more preferably 20 to 50 mass%. The viscosity of the colored base paint at 20°C at 6 rpm measured by a Brookfield-type viscometer is preferably within the range of 200 to 7000 cps, more preferably 300 to 6000 cps, and even more preferably 500 to 5000 cps.

Effect Base Coating Film

The effect base coating film may generally contain an interference pigment, a surface adjusting agent, and a rheology control agent.

The effect base coating film is formed by applying an effect base paint (Y), preferably followed by drying. The dry film thickness of the effect base coating film is preferably about 0.2 to 4.5 pm, more preferably 0.2 to 4 μm, and even more preferably about 0.2 to 3.5 pm, in terms of obtaining a coating film with excellent pearl luster.

The effect base paint (Y) contains water as a main solvent, and may contain an interference pigment, a surface adjusting agent, and a rheology control agent.

Interference pigments are effect pigments obtained by coating the surface of transparent or translucent flaky base materials, such as natural mica, synthetic mica, glass, iron oxide, aluminum oxide, and various metal oxides, with metal oxides with different refractive indices. The interference pigments can be used singly or in a combination of two or more.

Natural mica is a flaky base material obtained by pulverizing mica from ore. Synthetic mica is synthesized by heating an industrial material, such as $SiO_2$, $MgO$, $Al_2O_3$, $K_2SiF_6$, or $Na_2SiF_6$, to melt the material at a high temperature of about 1500°C; and cooling the melt for crystallization. When compared with natural mica, synthetic mica contains a smaller amount of impurities, and has a more uniform size and thickness. Specifically, examples of synthetic mica base materials include fluorophlogopite ($KMg_3AlSi_3O_{10}F_2$), potassium tetrasilicon mica ($KMg_{2.5}AlSi_4O_{10}F_2$), sodium tetrasilicon mica ($NaMg_{2.5}AlSi_4O_{10}F_2$), Na taeniolite ($NaMg_2LiSi_4O_{10}F_2$), LiNa taeniolite ($LiMg_2LiSi_4O_{10}F_2$), and the like.

Examples of the metal oxide include titanium oxide, iron oxide, and the like. Interference pigments can develop various different interference colors depending on the difference in the thickness of the metal oxide.

Specific examples of the interference pigment include the metal oxide-coated mica pigments, metal oxide-coated alumina flake pigments, metal oxide-coated glass flake pigments, and metal oxide-coated silica flake pigments described below.

Metal oxide-coated mica pigments are pigments obtained by coating the surface of a natural mica or synthetic mica base material with a metal oxide.

Metal oxide-coated alumina flake pigments are pigments obtained by coating the surface of an alumina flake base material with a metal oxide. Alumina flakes refer to flaky (thin) aluminum oxides, which are clear and colorless. Alumina flakes do not necessarily consist of only aluminum oxide, and may contain other metal oxides.

Metal oxide-coated glass flake pigments are pigments obtained by coating the surface of a flaky glass base material with a metal oxide. The metal oxide-coated glass flake pigments have a smooth base material surface, which causes intense light reflection.

Metal oxide-coated silica flake pigments are pigments obtained by coating flaky silica, a base material having a smooth surface and a uniform thickness, with a metal oxide.

Preferred among the interference pigments are those obtained by coating the surface of base materials, such as natural mica, synthetic mica, silicon dioxide, or aluminum oxide, with metal oxides, such as titanium oxide or iron oxide, in terms of increasing the lightness and chroma in the highlight of the coating film. Such pigments are called pearl pigments because of their pearlescent texture and transparency. Examples of pearl pigments include white pearl pigments obtained by coating the surface of natural or synthetic mica base materials with titanium oxide, and having white color due to the reflection of multiple reflection light; interference pearl pigments obtained by coating the surface of natural or synthetic mica base materials with titanium oxide, and colored by the interference of multiple reflection light; and color pearl pigments obtained by coating the surface of natural or synthetic mica base materials with iron oxide.

The average particle size of the interference pigment is preferably within the range of 5 to 30 $\mu$m, and particularly preferably 7 to 20 $\mu$m, in terms of the high chroma and lightness in the excellent highlight of the multilayer coating film to be obtained.

Moreover, the thickness of the interference pigment is preferably within the range of 0.05 to 1 $\mu$m, and particularly preferably 0.1 to 0.8 $\mu$m, in terms of the high chroma and lightness in the excellent highlight of the multilayer coating film to be obtained. The thickness as used herein is obtained in such a manner that when a cross-section of a coating film containing an interference pigment is observed with an optical microscope, the minor axis of the interference pigment particles is measured using image-processing software, and the average of the measured values of 100 or more particles is defined as the thickness.

The content of the interference pigment in the effect base paint (Y) as a solids content is preferably 20 to 70 parts by mass, and more preferably 30 to 60 parts by mass, based on 100 parts by mass of the solids content in the effect base paint (Y), in terms of the excellent pearl luster and the high chroma and lightness in the highlight of the multilayer coating film to be obtained.

In the present specification, "solids content" means non-volatile components, and refers to the residue of a sample after the removal of volatile components, such as water and organic solvent. The solids content can be calculated by multiplying the mass of the sample by the solids concentration. The solids concentration can be measured by dividing the mass of a sample (3 g) dried at 105°C for 3 hours by the mass of the sample before drying.

The surface adjusting agent is used to facilitate uniform orientation of the above interference pigment dispersed in water on the object when the effect base paint (Y) is applied to the object.

The surface adjusting agent is preferably one having a contact angle of preferably 8 to 20°, more preferably 9 to 19°, and even more preferably 10 to 18°, with respect to a previously degreased tin plate (produced by Paltek Corporation); the contact angle being measured in such a manner that a liquid that is a mixture of isopropanol, water, and the surface adjusting agent at a ratio of 4.5/95/1 is adjusted to have a viscosity of 150 mPa·s measured by a Brookfield-type viscometer at a rotor rotational speed of 60 rpm at a temperature of 20°C, 10 $\mu$L of the liquid is added dropwise to the tin plate, and the contact angle with respect to the tin plate is measured 10 seconds after dropping.

The 4.5/95/1 ratio, which is the mass ratio of isopropanol/water/surface adjusting agent, corresponds to the component ratio of the dispersion for evaluating the surface adjusting agent. The 150 mPa·s viscosity measured by a Brookfield-type viscometer at a rotor rotational speed of 60 rpm is a normal value during coating to a substrate. Moreover, the 8 to 20° contact angle with respect to the tin plate represents the wet spreading of liquid under standard coating conditions. When the contact angle is 8° or more, the liquid is applied to a substrate without being overly spread; whereas when the contact angle is 20° or less, the liquid is uniformly applied to a substrate without being overly repelled.

As the surface adjusting agent, known surface adjusting agents can be used.

Examples of the surface adjusting agent include silicone-based surface adjusting agents, acrylic-based surface adjusting agents, vinyl-based surface adjusting agents, fluorine-based surface adjusting agents, acetylenediol-based surface adjusting agents, and like surface adjusting agents. These surface adjusting agents can be used singly or in a combination of two or more.

Usable silicone-based surface adjusting agents include polydimethylsiloxane and modified silicone obtained by modifying polydimethylsiloxane. Examples of modified silicone include polyether-modified silicone, acrylic-modified silicone, polyester-modified silicone, and the like.

Examples of commercial products of the surface adjusting agent include BYK series (produced by BYK-Chemie), Tego series (produced by Evonik), Glanol series and Polyflow series (produced by Kyoeisha Chemical Co., Ltd.), DISPARLON series (produced by Kusumoto Chemicals, Ltd.), Surfynol (registered trademark) series (produced by Evonik Industries), and the like.

The content of the surface adjusting agent in the effect base paint (Y) as a solids content is preferably 4 to 400 parts by mass, more preferably 5 to 100 parts by mass, and even more preferably 8 to 60 parts by mass, based on 100 parts by mass of the solids content in the interference pigment, in terms of obtaining a multilayer coating film with high lightness and high chroma in the highlight.

The solids content of the surface adjusting agent is preferably 0.01 to 40 parts by mass, more preferably 0.02 to 35 parts by mass, and even more preferably 0.05 to 30 parts by mass, based on 100 parts by mass of the total solids content in the effect base paint (Y), in terms of obtaining a multilayer coating film with high lightness and high chroma in the highlight.

As the rheology control agent, a known rheology control agent can be used. Examples include silica-based fine powder, mineral-based rheology control agents, barium sulfate atomization powder, polyamide-based rheology control agents, organic resin fine particle rheology control agents, diurea-based rheology control agents, urethane association-type rheology control agents, polyacrylic acid-based rheology control agents, which are acrylic swelling-type, cellulose-based rheology control agents, and the like. Of these, particularly in terms of obtaining a coating film with excellent pearl luster, it is preferable to use a mineral-based rheology control agent, a polyacrylic acid-based rheology control agent, or a cellulose-based rheology control agent; and it is particularly preferable to use a cellulose-based rheology control agent. These rheology control agents can be used singly or in a combination of two or more.

Examples of mineral-based rheology control agents include swelling laminar silicate that has a 2:1 type crystal structure. Specific examples include smectite group clay minerals, such as natural or synthetic montmorillonite, saponite, hectorite, stevensite, beidellite, nontronite, bentonite, and laponite; swelling mica group clay minerals, such as Na-type tetrasilicic fluorine mica, Li-type tetrasilicic fluorine mica, Na salt-type fluorine taeniolite, and Li-type fluorine taeniolite; vermiculite; substitution products or derivatives thereof; and mixtures thereof.

Examples of polyacrylic acid-based rheology control agents include sodium polyacrylate, polyacrylic acid-(meth)acrylic acid ester copolymers, and the like.

Examples of commercial products of the polyacrylic acid-based rheology control agent include "Primal ASE-60," "Primal TT615," and "Primal RM5" (trade names, produced by The Dow Chemical Company); "SN Thickener 613," "SN Thickener 618," "SN Thickener 630," "SN Thickener 634," and "SN Thickener 636" (trade names, produced by San Nopco Limited); and the like. The acid value of the solids content of the polyacrylic acid-based rheology control agent is within the range of 30 to 300 mgKOH/g, and preferably 80 to 280 mgKOH/g.

Examples of cellulose-based rheology control agents include carboxymethylcellulose, methylcellulose, hydroxyethylcellulose, hydroxyethylmethylcellulose, hydroxypropylmethylcellulose, methylcellulose, cellulose nanofibers, and the like. Of these, cellulose nanofibers are particularly preferably used, in terms of obtaining a coating film with excellent pearl luster.

The cellulose nanofibers may also be referred to as cellulose nanofibrils, fibrillated cellulose, or nanocellulose crystals.

The cellulose nanofibers have a number average fiber diameter within the range of preferably 2 to 500 nm, more preferably 2 to 250 nm, and even more preferably 2 to 150 nm, in terms of obtaining a coating film with excellent pearl luster. The cellulose nanofibers also have a number average fiber length within the range of preferably 0.1 to 20 $\mu$m, more preferably 0.1 to 15 $\mu$m, and even more preferably 0.1 to 10 $\mu$m.

The number average fiber diameter and number average fiber length are measured and calculated from, for example, an image obtained by subjecting a sample (cellulose nanofibers diluted with water) to a dispersion treatment, casting the sample on a grid coated with a carbon film that has been subjected to hydrophilic treatment, and observing the sample with a transmission electron microscope (TEM).

The cellulose nanofibers for use may be those obtained by defibrating a cellulose material and stabilizing it in water. The cellulose material as used here refers to cellulose-main materials in various forms. Specific examples include pulp (e.g., grass plant-derived pulp, such as wood pulp, jute, Manila hemp, and kenaf); natural cellulose, such as cellulose produced by microorganisms; regenerated cellulose obtained by dissolving cellulose in a copper ammonia solution, a solvent of a morpholine derivative, or the like, and subjecting the dissolved cellulose to spinning; fine cellulose obtained by subjecting the cellulose material to mechanical treatment, such as hydrolysis, alkali hydrolysis, enzymatic decomposition, blasting treatment, vibration ball milling, and the like, to depolymerize the cellulose; and the like.

For the cellulose nanofibers, anionically modified cellulose nanofibers can be used. Examples of anionically modified cellulose nanofibers include carboxylated cellulose nanofibers, carboxymethylated cellulose nanofibers, sulfonic acid group-containing cellulose nanofibers, phosphate group-containing cellulose nanofibers, and the like. The anionically modified cellulose nanofibers can be obtained, for example, by incorporating functional groups such as carboxyl groups and carboxymethyl groups into a cellulose material by a known method, washing the obtained modified cellulose to prepare a dispersion of the modified cellulose, and defibrating this dispersion. The carboxylated cellulose is also referred to as oxidized cellulose.

The oxidized cellulose is obtained, for example, by oxidizing the cellulose material in water using an oxidizing agent in the presence of a compound selected from the group consisting of N-oxyl compounds, bromide, iodide, and mixtures thereof.

Examples of commercial products of cellulose nanofibers include Rheocrysta (registered trademark) produced by DKS Co. Ltd., and the like.

The content of the rheology control agent in the effect base paint (Y) as a solids content is preferably 0.1 to 97 parts by mass, more preferably 0.5 to 80 parts by mass, and even more preferably 1 to 60 parts by mass, based on 100 parts by mass of the total solids content in the effect base paint (Y), in terms of obtaining a multilayer coating film with high lightness and high chroma in the highlight.

The effect base paint (Y) may further suitably contain an organic solvent, a pigment other than the interference pigment, a pigment dispersant, a pigment derivative, an antisettling agent, a base resin and/or a dispersion resin, a curing agent, an antifoaming agent, an ultraviolet absorber, and a light stabilizer, if necessary.

Examples of pigments other than the interference pigment include color pigments, effect pigments other than the interference pigment, extender pigments, and the like.

The color pigment is not particularly limited. Specific examples include organic pigments, such as benzimidazolone pigments, pyrazolone pigments, azo pigments, quinacridone pigments, diketopyrrolopyrrole pigments, perylene pigments, perinone pigments, isoindoline pigments, isoindolinone pigments, metal chelate azo pigments, phthalocyanine pigments, indanthrone pigments, dioxazine pigments, threne pigments, and indigo pigments; composite oxide inorganic pigments, carbon black pigments, and the like. These can be used singly or in a combination of two or more. In particular, yellow pigments, orange pigments, and red pigments can be preferably used.

When a color pigment is used, the content thereof as a solids content is preferably 20 parts by mass or less, and more preferably 0.1 to 15 parts by mass, based on 100 parts by mass of the solids content in the effect base paint (Y), in terms of the high chroma and lightness in the highlight of the multilayer coating film to be obtained.

Examples of effect pigments other than the interference pigment include aluminum flake pigments, vapor deposition metal flake pigments, and the like.

Examples of extender pigments include talc, silica, calcium carbonate, barium sulfate, zinc white (zinc oxide), and the like. These can be used singly or in a combination of two or more.

Examples of the base resin include acrylic resins, polyester resins, alkyd resins, urethane resins, and the like. As the dispersion resin, existing dispersion resins, such as acrylic resins, epoxy resins, polycarboxylic acid resins, and polyester resins, can be used. The curing agent is selected from the group consisting of melamine, a melamine derivative, a urea resin, (meth)acrylamide, polyaziridine, polycarbodiimide, a blocked or unblocked polyisocyanate compound, (meth)acrylamide, and a copolymer of N-methylol group- or N-alkoxymethyl group-containing (meth)acrylamide. These may be used singly or in a combination of two or more.

The effect base paint (Y) is prepared by mixing and dispersing the above components. The solids content during coating is preferably 0.5 to 10 mass%, and more preferably 1 to 8 mass%, in terms of obtaining a coating film with low graininess and excellent pearl luster.

The viscosity of the effect base paint (Y) at a temperature of 20°C measured by a Brookfield-type viscometer at 60 rpm after 1 minute (also referred to as "the B60 value" in the present specification) is preferably 50 to 900 mPa·s, and more preferably 100 to 800 mPa·s, in terms of obtaining a coating film with excellent pearl luster. The viscometer used in this case is a VDA-type digital Vismetron viscometer (a Brookfield-type viscometer, produced by Shibaura System Co., Ltd.).

The effect base paint (Y) can be applied by a method such as electrostatic coating, air spray coating, or airless spray coating. Rotary atomization electrostatic coating is particularly preferable.

The film thickness 30 seconds after the effect base paint (Y) is attached to the substrate is preferably 3 to 100 $\mu$m, more preferably 4 to 80 $\mu$m, and even more preferably 5 to 60 $\mu$m, in terms of obtaining a coating film with excellent pearl luster.

The dry film thickness of the effect base coating film is preferably 0.2 to 4.5 $\mu$m, more preferably 0.2 to 4 $\mu$m, and particularly preferably 0.2 to 3.5 $\mu$m, in terms of obtaining a coating film with excellent pearl luster.

In the present specification, the dry film thickness is calculated from the following formula (3).

$$x = (sc*10000)/(S*sg) \qquad (3)$$

x: film thickness (pm)
sc: coating solids content (g)
S: evaluation area of coating solids content (cm$^2$)
sg: coating film specific gravity (g/cm$^3$)

The X value in formula 1 and the Y value in formula 2 of the multilayer coating film of the present invention can be suitably set by a person skilled in the art by selecting the components in the colored base paint (X) and the effect base paint (Y) and the contents thereof. As a result, a multilayer coating film with high lightness and chroma in the highlight can be easily produced.

In addition to the colored base coating film and the effect base coating film, the multilayer coating film of the present invention may further comprise at least one of an intermediate coating film, a base coating film, and a clear coating film. Each of the intermediate coating film, the base coating film, and the clear coating film may be a single layer or two or more layers.

The multilayer coating film of the present invention preferably comprises a clear coating film on the effect base coating film.

Clear Coating Film

The clear coating film is generally formed by applying a clear paint (Z), preferably followed by drying.

The clear paint (Z) may be a one-component clear paint containing a base resin and a curing agent, or a two-component clear paint having a hydroxy-containing resin and a polyisocyanate compound.

The clear paint (Z) is preferably a two-component clear paint having a hydroxy-containing resin and an isocyanate group-containing compound, in terms of the adhesion and pearl luster of the multilayer coating film to be obtained.

As the hydroxy-containing resin, conventionally known resins can be used without limitation, as long as they are resins containing a hydroxyl group. Examples of the hydroxy-containing resin include hydroxy-containing acrylic resins, hydroxy-containing polyester resins, hydroxy-containing polyether resins, hydroxy-containing polyurethane resins, and the like; preferably hydroxy-containing acrylic resins and hydroxy-containing polyester resins; and particularly preferably hydroxy-containing acrylic resins.

The hydroxy value of the hydroxy-containing acrylic resin is preferably within the range of 80 to 200 mgKOH/g, and more preferably 100 to 180 mgKOH/g. When the hydroxy value is 80 mgKOH/g or more, the crosslinking density is high, and thus the scratch resistance is sufficient. Further, when the hydroxy value is 200 mgKOH/g or less, the water resistance of the coating film is satisfied.

The weight average molecular weight of the hydroxy-containing acrylic resin is preferably within the range of 2500 to 40000, and more preferably 5000 to 30000. When the weight average molecular weight is 2500 or more, the coating film performance, such as acid resistance, is satisfied. When the weight average molecular weight is 40000 or less, the smoothness of the coating film is sufficient, and thus the finish is satisfied.

In the present specification, the weight average molecular weight refers to a value calculated from a chromatogram measured by gel permeation chromatography based on the molecular weight of standard polystyrene. For the gel permeation chromatography, "HLC8120GPC" (produced by Tosoh Corporation) was used. The measurement was conducted using four columns: "TSKgel G-4000HXL," "TSKgel G-3000HXL," "TSKgel G-2500HXL," and "TSKgel G-2000HXL" (trade names, all produced by Tosoh Corporation) under the conditions of mobile phase: tetrahydrofuran, measuring temperature: 40°C, flow rate: 1 cc/min, and detector: RI.

The glass transition temperature of the hydroxy-containing acrylic resin is -40°C to 20°C, and particularly preferably -30°C to 10°C. When the glass transition temperature is -40°C or more, the coating film hardness is sufficient. When the glass transition temperature is 20°C or less, the coating surface smoothness of the coating film is satisfied.

The polyisocyanate compound is a compound having at least two isocyanate groups per molecule. Examples include aliphatic polyisocyanates, alicyclic polyisocyanates, aromatic-aliphatic polyisocyanates, aromatic polyisocyanates, derivatives of these polyisocyanates, and the like. The polyisocyanate compounds can be used singly or in a combination of two or more.

When the two-component clear paint is used, the equivalent ratio of the hydroxy groups in the hydroxy-containing resin to the isocyanate groups in the polyisocyanate compound (NCO/OH) is preferably within the range of 0.5 to 2, and more preferably 0.8 to 1.5, in terms of the curability and scratch resistance of the coating film.

Examples of combinations of a base resin and a curing agent in the one-component clear paint include a carboxy-containing resin and an epoxy-containing resin, a hydroxy-containing resin and a blocked polyisocyanate compound, a hydroxy-containing resin and a melamine resin, and the like.

The clear paint (Z) may suitably contain additives, such as solvents (e.g., water and organic solvents), curing catalysts, antifoaming agents, ultraviolet absorbers, light stabilizers, thickeners, surface adjusting agents, and pigments, if necessary.

The form of the clear paint (Z) is not particularly limited. The clear paint (Z) is generally used as an organic solvent-based paint composition. Examples of the organic solvent used in this case include various organic solvents for paints, such as aromatic or aliphatic hydrocarbon solvents, ester solvents, ketone solvents, and ether solvents. As the organic solvent, the solvent used in the preparation of the hydroxy-containing resin can be used as is; or one or more other organic solvents may be added appropriately, and the resulting mixed solvent can be used.

The solids concentration of the clear paint (Z) is preferably about 30 to 70 mass%, and more preferably about 40 to 60 mass%.

The coating of the clear paint (Z) is not particularly limited. For example, the clear paint (Z) can be applied by a coating method, such as air spray coating, airless spray coating, rotary atomization coating, or curtain coating. In these coating methods, an electrostatic charge may be applied, if necessary. Among these, rotary atomization coating using an electrostatic charge is preferable. In general, the coating amount of the clear paint (Z) is preferably an amount that achieves a cured film thickness of about 10 to 50 $\mu$m.

Moreover, when the clear paint (Z) is applied, it is preferable to appropriately adjust the viscosity of the clear paint (Z) within a viscosity range suitable for the coating method. For example, for rotary atomization coating using an electrostatic charge, it is preferable to appropriately adjust the viscosity of the clear paint (Z) within a range of about 15 to 60 seconds as measured by a Ford cup No. 4 viscometer at 20°C using a solvent, such as an organic solvent.

The method for forming a multilayer coating film of the present invention comprises, as described above, the following steps (1) to (3):

(1) applying a colored base paint (X) to a substrate to form a colored base coating film;
(2) applying an effect base paint (Y) to the colored base coating film to form an effect base coating film; and
(3) heating the colored base coating film formed in step (1) and the effect base coating film formed in step (2) separately or simultaneously to cure the coating films.

The method for forming a multilayer coating film of the present invention preferably comprises the following steps (1), (2), (4), and (5) :

(1) applying a colored base paint (X) to a substrate to form a colored base coating film;
(2) applying an effect base paint (Y) to the colored base coating film to form an effect base coating film;
(4) applying a clear paint (Z) to the effect base coating film to form a clear coating film; and
(5) heating the colored base coating film formed in step (1), the effect base coating film formed in step (2), and the clear coating film formed in step (4) separately or simultaneously to cure the coating films.

In step (3) of the above method, "heating the colored base coating film formed in step (1) and the effect base coating film formed in step (2) separately" means that the colored base coating film formed in step (1) is cured by heating, and after step (2), the effect base coating film formed in step (2) is cured by heating.

Similarly, in step (5) of the method, "heating the colored base coating film formed in step (1), the effect base coating film formed in step (2), and the clear coating film formed in step (4) separately or simultaneously" includes the following:

after the formation of all of the colored base coating film in step (1), the effect base coating film in step (2), and the clear coating film in step (4), curing these coating films by simultaneous heating;
curing the colored base coating film formed in step (1) by heating, then after step (2), curing the effect base coating film formed in step (2) by heating, and then after step (4), curing the clear coating film formed in step (4) by heating;
curing the colored base coating film formed in step (1) and the effect base coating film formed in step (2) by simultaneous heating, and then after step (4), curing the clear coating film formed in step (4) by heating; and
curing the colored base coating film formed in step (1) by heating, and then after steps (2) and (4), curing the effect base coating film formed in step (2) and the clear coating film formed in step (4) by simultaneous heating.

Examples of the substrate include exterior panels of vehicle bodies, such as automobiles, trucks, motorcycles, and buses; automobile components; and exterior panels of home appliances, such as mobile phones and audio equipment. Among these, vehicle body exterior panels and automobile components are preferable. In the present invention, the substrate is also referred to as an "object."

The materials of these substrates are not particularly limited. Examples include metal materials, such as iron, aluminum, brass, copper, tin, stainless steel, galvanized steel, and zinc alloy (Zn-Al, Zn-Ni, Zn-Fe or the like)-plated steel; resins, such as polyethylene resin, polypropylene resin, acrylonitrile-butadiene-styrene (ABS) resin, polyamide resin, acrylic resin, vinylidene chloride resin, polycarbonate resin, polyurethane resin, and epoxy resin; plastic materials, such as various FRPs; inorganic materials, such as glass, cement, and concrete; wood; fibrous materials, such as paper and cloth; and the like. Among these, metal materials or plastic materials are preferable.

Moreover, examples of the substrate to which the multilayer coating film is applied include exterior panels of vehicle bodies, automobile components, home appliances, and those obtained by subjecting metal surfaces of metal base materials, such as steel plates that constitute these, to surface treatment, such as phosphate treatment, chromate treatment, or composite oxide treatment.

A coating film may be further formed on the object that may or may not be subjected to surface treatment. For example, the substrate as a base material may be subjected to surface treatment as necessary, and an undercoating film may be formed thereon; or an intermediate coating film may be formed on the undercoating film. For the formation of the undercoating film and intermediate coating film, for example, when the substrate is a vehicle body, undercoating and intermediate paints that are themselves known and that are generally used for coating of vehicle bodies can be used.

As undercoat paints for forming such undercoating films, for example, electrodeposition paints, preferably cationic electrodeposition paints, can be used. Moreover, usable examples of intermediate paints for forming such intermediate coating films include those obtained by forming paints from base resins such as acrylic resin, polyester resin, alkyd resin, urethane resin, and epoxy resin, having a crosslinkable functional group such as a carboxyl group or a hydroxyl group, amino resins such as melamine resin and urea resin, and crosslinking agents such as polyisocyanate compounds that may be blocked, together with pigments, thickeners, and other optional components.

In the present specification, "applying a colored base paint (X) to a substrate" is not limited to direct application of the colored base paint (X) to the substrate, and also includes application of the colored base paint (X) to the substrate after surface treatment of the substrate or formation of additional layers, such as an undercoating film and/or an intermediate coating film, on the substrate.

Steps (1), (2), and (4) are as described regarding each coating film, and steps (3) and (5) are to heat the colored base coating film, the effect base coating film, and the clear coating film formed in each step to separately or simultaneously cure these coating films.

Heating can be performed by a known means. For example, a drying furnace, such as a hot-blast stove, an electric furnace, or an infrared beam heating furnace, can be used. The heating temperature is preferably within the range of 70 to 150°C, and more preferably 80 to 140°C. The heating time is not particularly limited; however, it is preferably within the range of 10 to 40 minutes, and more preferably 20 to 30 minutes.

The present invention also provides an object comprising the multilayer coating film described above. The "object comprising the multilayer coating film" may be an article simply comprising the multilayer coating film.

Examples

The present invention is described in more detail below with reference to Examples and Comparative Examples. However, the present invention is not limited only to these Examples. "Part(s)" and "%" are both based on mass.

Production of Acrylic Resin Aqueous Dispersion (R-1)

Production Example 1

128 parts of deionized water and 2 parts of "Adeka Reasoap SR-1025" (trade name, produced by Adeka, emulsifier, active ingredient: 25%) were placed in a reaction vessel equipped with a thermometer, a thermostat, a stirrer, a reflux condenser, a nitrogen inlet tube, and a dropping funnel. The mixture was stirred and mixed in a nitrogen flow, and heated to 80°C.

Subsequently, 1% of the entire amount of a monomer emulsion for the core portion, which is described below, and 5.3 parts of a 6% ammonium persulfate aqueous solution were introduced into the reaction vessel, and maintained therein at 80°C for 15 minutes. Thereafter, the remaining monomer emulsion for the core portion was added dropwise over a period of 3 hours to the reaction vessel maintained at the same temperature. After completion of the dropwise addition, the mixture was aged for 1 hour. A monomer emulsion for the shell portion, which is described below, was then added dropwise over a period of 1 hour, followed by aging for 1 hour. Thereafter, the mixture was cooled to 30°C while gradually adding 40 parts of a 5% 2-(dimethylamino)ethanol aqueous solution thereto; and filtered through a 100-mesh nylon cloth, thereby obtaining an acrylic resin aqueous dispersion (R-1) having an average particle size of 100 nm and a solids content of 30%. The obtained acrylic resin aqueous dispersion had an acid value of 33 mgKOH/g and a hydroxy value of 25 mgKOH/g.

Monomer emulsion for the core portion: The monomer emulsion for the core portion was obtained by mixing and stirring 40 parts of deionized water, 2.8 parts of "Adeka Reasoap SR-1025," 2.1 parts of methylene bisacrylamide, 2.8 parts of styrene, 16.1 parts of methyl methacrylate, 28 parts of ethyl acrylate, and 21 parts of n-butyl acrylate.

Monomer emulsion for the shell portion: The monomer emulsion for the shell portion was obtained by mixing and stirring 17 parts of deionized water, 1.2 parts of "Adeka Reasoap SR-1025," 0.03 parts of ammonium persulfate, 3 parts of styrene, 5.1 parts of 2-hydroxyethyl acrylate, 5.1 parts of methacrylic acid, 6 parts of methyl methacrylate, 1.8 parts of ethyl acrylate, and 9 parts of n-butyl acrylate.

Production of Acrylic Resin Solution (R-2)

Production Example 2

35 parts of propylene glycol monopropyl ether was placed into a reaction vessel equipped with a thermometer, a thermostat, a stirrer, a reflux condenser, a nitrogen inlet tube, and a dropping funnel; and heated to 85°C. A mixture comprising 30 parts of methyl methacrylate, 20 parts of 2-ethylhexyl acrylate, 29 parts of n-butyl acrylate, 15 parts of 2-hydroxyethyl acrylate, 6 parts of acrylic acid, 15 parts of propylene glycol monopropyl ether, and 2.3 parts of 2,2'-azobis(2,4-dimethylvaleronitrile) was then added dropwise thereto over a period of 4 hours. After completion of the dropwise addition, the mixture was aged for 1 hour. Further, a mixture of 10 parts of propylene glycol monopropyl ether and 1 part of 2,2'-azobis(2,4-dimethylvaleronitrile) was added dropwise thereto over a period of 1 hour. After completion of the dropwise addition, the mixture was aged for 1 hour. Further, 7.4 parts of diethanolamine was added thereto, thereby obtaining an acrylic resin solution (R-2) having a solids content of 55%. The obtained hydroxy-containing acrylic resin had an acid value of 47 mgKOH/g, a hydroxy value of 72 mgKOH/g, and a weight average molecular weight of 58000.

Production of Polyester Resin Solution (R-3)

Production Example 3

109 parts of trimethylolpropane, 141 parts of 1,6-hexanediol, 126 parts of 1,2-cyclohexanedicarboxylic acid anhydride, and 120 parts of adipic acid were placed into a reaction vessel equipped with a thermometer, a thermostat, a stirrer, a reflux condenser, and a water separator. The mixture was heated from 160°C to 230°C over a period of 3 hours, followed by a condensation reaction at 230°C for 4 hours. Subsequently, to introduce a carboxyl group to the obtained condensation reaction product, 38.3 parts of trimellitic anhydride was added to the product, followed by a reaction at 170°C for 30 minutes. Thereafter, the product was diluted with 2-ethyl-1-hexanol, thereby obtaining a polyester resin solution (R-3) having a solids content of 70%. The obtained hydroxy-containing polyester resin had an acid value of 46 mgKOH/g, a hydroxy value of 150 mgKOH/g, and a number average molecular weight of 1400.

Production of Extender Pigment Dispersion

Production Example 4

327 parts (solids content: 180 parts) of the acrylic resin solution (R-2), 360 parts of deionized water, 6 parts of Surfynol 104A (trade name, produced by Air Products, antifoaming agent, solids content: 50%), and 250 parts of Barifine BF-20 (trade name, produced by Sakai Chemical Industry Co., Ltd., barium sulfate powder, average particle size: 0.03 μm) were placed in a paint conditioner, and a glass bead medium was added thereto. The mixture was mixed and dispersed at room temperature for 1 hour, thereby obtaining an extender pigment dispersion (P-1) having a solids content of 44%.

Production of Yellow Pigment Dispersion

Production Example 5

182 parts (solids content: 100 parts) of the acrylic resin solution (R-2), 301 parts of "Yellow 2GLMA" (trade name, produced by Dominion Color Corporation, bismuth vanadate pigment), and 439 parts of deionized water were mixed. After the mixture was adjusted to pH 8.6 using 2-amino-2-methyl-1-propanol, the mixture was dispersed in a paint shaker for 2 hours, thereby obtaining a yellow pigment dispersion (P-2) having a solids content of 43.0%.

Production of Red Pigment Dispersion

Production Example 6

182 parts (solids content: 100 parts) of the acrylic resin solution (R-2), 499 parts of "Irgazin Red L3660HD" (trade name, produced by BASF, diketopyrrolopyrrole pigment), and 478 parts of deionized water were mixed. After the mixture was adjusted to pH 7.7 using 2-amino-2-methyl-1-propanol, the mixture was dispersed in a paint shaker for 2 hours, thereby obtaining a red pigment dispersion (P-3) having a solids content of 51.4%.

Production of White Pigment Dispersion

Production Example 7

182 parts (solids content: 100 parts) of the acrylic resin solution (R-2), 1010 parts of "Titanix JR-903" (trade name, produced by Tayca Co., Ltd., titanium oxide), and 479 parts of deionized water were mixed. After the mixture was adjusted to pH 9.0 using 2-amino-2-methyl-1-propanol, the mixture was dispersed in a paint shaker for 2 hours, thereby obtaining a white pigment dispersion (P-4) having a solids content of 66.0%.

Production of Brown Pigment Dispersion

Production Example 8

182 parts (solids content: 100 parts) of the acrylic resin solution (R-2), 152 parts of "Daipyroxide TM Red 8270" (trade name, produced by Dainichiseika Color & Chemicals Mfg. Co., Ltd., red oxide), and 429 parts of deionized water were mixed. After the mixture was adjusted to pH 8.8 using 2-amino-2-methyl-1-propanol, the mixture was dispersed in a paint shaker for 2 hours, thereby obtaining a brown pigment dispersion (P-5) having a solids content of 32.7%.

Production of Red Pigment Dispersion

Production Example 9

182 parts (solids content: 100 parts) of the acrylic resin solution (R-2), 150 parts of "Maroon 179 229-6438" (trade name, produced by Sun Chemical Corporation, organic perylene pigment), and 479 parts of deionized water were mixed. After the mixture was adjusted to pH 7.5 using 2-amino-2-methyl-1-propanol, the mixture was dispersed in a paint shaker for 2 hours, thereby obtaining a red pigment dispersion (P-6) having a solids content of 30.6%.

Production of Orange Pigment Dispersion

Production Example 10

182 parts (solids content: 100 parts) of the acrylic resin solution (R-2), 100 parts of "Irgazin Cosmoray Orange L2950" (trade name, produced by BASF, diketopyrrolopyrrole pigment), and 614 parts of deionized water were mixed. After the mixture was adjusted to pH 7.6 using 2-amino-2-methyl-1-propanol, the mixture was dispersed in a paint shaker for 2 hours, thereby obtaining an orange pigment dispersion (P-7) having a solids content of 22.2%.

Production of Red Pigment Dispersion

Production Example 11

182 parts (solids content: 100 parts) of the acrylic resin solution (R-2), 150 parts of "Rubin L4025" (trade name, produced by BASF, diketopyrrolopyrrole red pigment), and 440 parts of deionized water were mixed. After the mixture was adjusted to pH 7.7 using 2-amino-2-methyl-1-propanol, the mixture was dispersed in a paint shaker for 2 hours, thereby obtaining a red pigment dispersion (P-8) having a solids content of 32.2%.

Production of Transparent Base Paint (W-1)

Production Example 12

In a stirring vessel, 14 parts (on a solids basis) of the extender pigment dispersion (P-1), 40 parts (on a solids basis) of the acrylic resin aqueous dispersion (R-1), 23 parts (on a solids basis) of the polyester resin solution (R-3), 10 parts (on a solids basis) of "U-Coat UX-310" (trade name, produced by Sanyo Chemical Industries, Ltd., urethane resin aqueous dispersion, solids content: 40%), and 27 parts (on a solids basis) of "Cymel 251" (trade name, produced by Nihon Cytec Industries Inc., melamine resin, solids content: 80%) were stirred and mixed, thereby preparing a transparent base paint (W-1).

Production of Colored Base Paint (X-1)

Production Example 13

WP522H enamel clear paint (product name, produced by Kansai Paint Co., Ltd., aqueous intermediate paint) was placed in a stirring vessel. The yellow pigment dispersion (P-2), the red pigment dispersion (P-3), and the white pigment dispersion (P-4) were added in amounts such that 8 parts by mass of Yellow 2GLMA, 2 parts by mass of Irgazin Red L3660HD, and 1.1 parts of Titanix JR-903 were present per 100 parts by mass of the resin solids content of WP522H. The resulting mixture was stirred and mixed, thereby preparing a colored base paint (X-1).

Production of Colored Base Paint (X-2)

Production Example 14

The transparent base paint (W-1) was placed in a stirring vessel. The yellow pigment dispersion (P-2), the red pigment dispersion (P-3), and the white pigment dispersion (P-4) were added in amounts such that 20 parts by mass of Yellow 2GLMA, 5 parts by mass of Irgazin Red L3660HD, and 2.7 parts of Titanix JR-903 were present per 100 parts by mass of the resin solids content in the transparent base paint (W-1). The resulting mixture was stirred and mixed, thereby preparing a colored base paint (X-2).

Production of Colored Base Paint (X-3)

Production Example 15

The transparent base paint (W-1) was placed in a stirring vessel. The white pigment dispersion (P-4), the red pigment dispersion (P-8), and the red pigment dispersion (P-3) were added in amounts such that 2.3 parts by mass of Titanix JR-903, 7.7 parts by mass of Rubin L4025, and 10.1 parts by mass of Irgazin Red L3660HD were present per 100 parts by mass of the resin solids content in the transparent base paint (W-1). The resulting mixture was stirred and mixed, thereby preparing a colored base paint (X-3).

Production of Colored Base Paint (X-4) (for Comparative Examples) Production Example 16

WP522H enamel clear paint (product name, produced by Kansai Paint Co., Ltd., aqueous intermediate paint) was placed in a vessel. The white pigment dispersion (P-3) was added in an amount such that 20 parts of Titanix JR-903 was present per 100 parts by mass of the resin solids content of WP522H. The resulting mixture was stirred and mixed, thereby preparing a colored base paint (X-4).

Production of Effect Base Paint (Y)

Production Example 17

In a stirring vessel, 78.1 parts of distilled water, 18.2 parts (solids content: 0.6 parts) of a rheology control agent (A-1), 1.3 parts (solids content: 1.3 parts) of an interference pigment (B-1), 0.8 parts (solids content: 0.3 parts) of the acrylic resin aqueous dispersion (R-1), 0.5 parts (solids content: 0.5 parts) of a surface adjusting agent (C-1), 0.4 parts (solids content: 0.2 parts) of an ultraviolet absorber (D-1), 0.3 parts (0.1 parts) of a light stabilizer (E-1), 0.01 parts of dimethylethanolamine, and 0.5 parts of ethylene glycol monobutyl ether were placed. The resulting mixture was stirred and mixed, thereby preparing an effect base paint (Y-1).
The rheology control agent (A-1), the interference pigment (B-1), the surface adjusting agent (C-1), the ultraviolet absorber (D-1), and the light stabilizer (E-1) are as follows.

(A-1) "Rheocrysta" (trade name, produced by DKS Co. Ltd., cellulose nanofiber, solids content: 2%)
(B-1) "Pyrisma (registered trademark) M40-58 SW Ambercup Orange" (trade name, produced by Merck & Co., Inc., iron oxide/titanium oxide-coated natural mica colored orange pearl, solids content: 100%)
(C-1) "Dynol 604" (trade name, produced by Evonik Industries, acetylenediol-based surface adjusting agent, solids content: 100%)
(D-1) "Tinuvin 479-DW(N)" (trade name, produced by BASF, ultraviolet absorber, solids content: 40%)
(E-1) "Tinuvin 123-DW(N)" (trade name, produced by BASF, light stabilizer, solids content: 50%)

Production Examples 18 to 30

Effect base paints (Y-2) to (Y-14) were obtained in the same manner as in Production Example 17, except that the formulations shown in Table 1 were used.

The following are components shown in Table 1.

(A-2): "Acrysol ASE-60" (trade name, produced by Dow Chemical Co., Ltd., polyacrylic acid-based rheology control agent, solids content: 28%)

(B-2) "Colorstream (registered trademark) F20-51 SW Lava Red" (trade name, produced by Merck & Co., Inc., iron oxide-coated silica flake colored red pearl, solids content: 100%)

(B-3) "Xirallic (registered trademark) T61-10 Micro Silver" (trade name, produced by Merck & Co., Inc., titanium oxide-coated alumina flake pigment, solids content: 100%)

(B-4) "Xirallic (registered trademark) T60-10 Crystal Silver" (trade name, produced by Merck & Co., Inc., titanium oxide-coated alumina flake pigment, solids content: 100%)

(C-2) "BYK348" (trade name, produced by BYK, silicone-based surface adjusting agent, solids content: 100%)

Table 1

| Production Example No. | | | 17 | 18 | 19 | 20 | 21 22 23 | | | 24 | 25 | 26 27 | | 28 29 | | 30 |
|---|---|---|---|---|---|---|---|---|---|---|---|---|---|---|---|---|
| Name of effect base paint (Y) | | | Y-1 | Y-2 | Y-3 | Y-4 | Y-5 Y-6 | | Y-7 | Y-8 | Y-9 | Y-10 | Y-11 | Y-12 | Y-13 | Y-14 |
| Formulation | Distilled water | | 78.1 | 76.3 | 60.9 | 60.9 | 75.6 | 90.4 | 74.7 | 77.2 | 77.2 | 69.3 | 93.3 | 88.9 | 78.6 | 75.7 |
| | Rheology control agent | A-1 | 18.2 | 17.9 | 32.1 | 32.1 | 16.0 | | 18.0 | 18.2 | 18.2 | 17.4 | | | 18.6 | 15.8 |
| | | A-2 | | | | | 1.1 | 2.3 | | | | | 1.9 | 2.2 | | 1.1 |
| | Interference pigment | B-1 | 1.3 | 2.5 | 0.8 | 0.8 | 0.8 | 0.8 | 1.3 | | | | 1.3 | 1.2 | | |
| | | B-2 | | | 0.5 | 0.5 | 0.5 | 0.5 | | | | | | | | 0.8 |
| | | B-3 | | | | | | | | 0.6 | | 3.9 | | | 0.6 | |
| | | B-4 | | | | | | | | | 0.6 | | | | | |
| | Brown pigment dispersion | P-5 | | | | | | | | | | | 0.6 | | | |
| | Red pigment dispersion | P-6 | | | 0.1 | 0.1 | 0.1 | 0.1 | 0.1 | 0.1 | 0.1 | | 0.2 | 0.2 | | 2.1 |
| | Orange pigment dispersion | P-7 | | | 2.7 | 2.7 | 2.7 | 2.7 | 3.4 | 1.7 | 1.7 | 5.2 | | 4.4 | | |
| | Acrylic resin aqueous dispersion | R-1 | 0.8 | 1.7 | 1.3 | 1.3 | 1.3 | 1.3 | 0.8 | 0.4 | 0.4 | 2.6 | 0.8 | 1.3 | 0.4 | 2.8 |
| | Surface adjusting agent | C-1 | 0.5 | 0.5 | 0.4 | | 0.4 | 0.4 | 0.5 | 0.5 | 0.5 | 0.5 | 0.5 | 0.4 | 0.5 | 0.4 |
| | | C-2 | | | | 0.4 | | | | | | | | | | |
| | Ultraviolet absorber | D-1 | 0.4 | 0.4 | 0.4 | 0.4 | 0.4 | 0.4 | 0.4 | 0.4 | 0.4 | 0.4 | 0.4 | 0.4 | 0.4 | 0.4 |
| | Light stabilizer | E-1 | 0.3 | 0.3 | 0.3 | 0.3 | 0.3 | 0.3 | 0.3 | 0.3 | 0.3 | 0.3 | 0.3 | 0.3 | 0.3 | 0.3 |
| | Dimethylethanolamine | | 0.01 | 0.01 | 0.01 | 0.01 | 0.12 | 0.24 | 0.01 | 0.01 | 0.01 | 0.01 | 0.20 | 0.23 | 0.01 | 0.12 |
| | Ethylene glycol monobutyl ether | | 0.5 | 0.5 | 0.5 | 0.5 | 0.5 | 0.5 | 0.5 | 0.5 | 0.5 | 0.5 | 0.5 | 0.5 | 0.5 | 0.5 |

| Production Example No. | | 17 | 18 | 19 | 20 | 21 | 22 | 23 | 24 | 25 | 26 | 27 | 28 | 29 | 30 |
|---|---|---|---|---|---|---|---|---|---|---|---|---|---|---|---|
| Properties | Solids content (%) | 2.7% | 4.1% | 3.7% | 3.7% | 3.7% | 3.7% | 3.4% | 2.3% | 2.3% | 6.9% | 3.1% | 4.0% | 2.0% | 3.6% |
| | Paint viscosity B60 value (mPa·s) | 358 | 358 | 384 | 384 | 450 | 442 | 358 | 358 | 358 | 358 | 466 | 420 | 358 | 362 |
| | Amount of interference pigment when the solids content of effect base paint (Y) is defined as 100 parts by mass (parts by mass) | 47.0 | 60.2 | 35.3 | 35.3 | 35.3 | 35.3 | 36.3 | 27.2 | 27.2 | 56.0 | 40.3 | 31.3 | 32.9 | 22.1 |
| | Amount of interference pigment when the total amount of effect base paint (Y) is defined as 100 parts by mass (parts by mass) | 1.3 | 2.5 | 1.3 | 1.3 | 1.3 | 1.3 | 1.3 | 0.6 | 0.6 | 3.9 | 1.3 | 1.2 | 0.6 | 0.8 |

EP 3 919 186 A1

Preparation of Clear Paint (Z)

Clear Paint (Z-1)

"KINO6510" (trade name, produced by Kansai Paint Co., Ltd., hydroxy-/isocyanate-curable acrylic resin/urethane resin-based two-component organic solvent-based paint) was used as a clear paint (Z-1).

Clear Paint (Z-2)

"Magicron TC-69" (trade name, Kansai Paint Co., Ltd., acrylic and melamine resin-based one-component organic solvent-based paint) was used as a clear paint (Z-2).

Preparation of Substrate 1

"Elecron 9400HB" cationic electrodeposition paint (trade name, produced by Kansai Paint Co., Ltd., an amine-modified epoxy resin-based cationic resin containing a blocked polyisocyanate compound as a curing agent) was applied by electrodeposition to a degreased and zinc phosphate-treated steel plate (JISG3141, size: 400 x 300 x 0.8 mm) to a cured film thickness of 20 $\mu$m. The resulting film was heated at 170°C for 20 minutes to be cured by crosslinking. Then, TP-65 white intermediate paint (trade name, produced by Kansai Paint Co., Ltd., a polyester resin solvent-based intermediate paint, L* value of the obtained coating film: 85) was electrostatically applied to a cured film thickness of 35 $\mu$m using a rotary-atomization bell-shaped coater; and the resulting film was heated at 140°C for 30 minutes to be cured by crosslinking, thereby obtaining substrate 1.

Preparation of Substrate 2

"Elecron 9400HB" cationic electrodeposition paint (trade name, produced by Kansai Paint Co., Ltd., an amine-modified epoxy resin-based cationic resin containing a blocked polyisocyanate compound as a curing agent) was applied by electrodeposition to a degreased and zinc phosphate-treated steel plate (JISG3141, size: 400 x 300 x 0.8 mm) to a cured film thickness of 20 $\mu$m. The resulting film was heated at 170°C for 20 minutes to be cured by crosslinking, thereby obtaining substrate 2.

Preparation of Test Plate

Example 1

The colored base paint (X-1) was electrostatically applied to substrate 1 to a cured film thickness of 25 $\mu$m with a rotary-atomization bell-shaped coater, and the resulting film was allowed to stand for 3 minutes to form a colored base coating film.

Subsequently, the effect pigment dispersion (Y-1) prepared as described above was adjusted to the paint viscosity as shown in Table 1 and applied to the colored base coating film to a dry film thickness of 0.5 $\mu$m using a Robot Bell (produced by ABB) at a booth temperature of 23°C and at a humidity of 68%. The resulting coating was allowed to stand for 3 minutes, and then preheated at 80°C for 3 minutes to form an effect base coating film.

Further, the clear paint (Z-1) was applied to the effect base coating film to a dry film thickness of 35 $\mu$m using a Robot Bell (produced by ABB) at a booth temperature of 23°C and at a humidity of 68% to form a clear coating film.

After the coating, the resulting coated substrate was allowed to stand at room temperature for 7 minutes and then heated in a hot-air circulation drying oven at 140°C for 30 minutes to simultaneously dry the multilayer coating film, thus forming a test plate.

The film thickness of the dry coating film shown in Table 2 was calculated from the following formula. The same applies to the following Examples.

$$\text{(Formula 2)} \quad x = (sc*10000)/(S*sg)$$

x: film thickness ($\mu$m)
sc: coating solids content (g)
S: evaluation area of coating solids content ($cm^2$)
sg: coating film specific gravity ($g/cm^3$)

Examples 2 to 14 and Comparative Examples 1 and 2

Test plates were obtained in the same manner as in Example 1, except that the substrate, the colored base paint (X) and its dry film thickness, the effect base paint (Y) and its dry film thickness, and the clear paint (Z) were changed as shown in Table 2.

Example 15

"WP-523H N-8.0" (trade name, produced by Kansai Paint Co., Ltd., aqueous intermediate paint) was electrostatically applied to substrate 2 to a dry film thickness of 30 $\mu$m using a Robot Bell (produced by ABB) at a booth temperature of 23°C and at a humidity of 68%. The resulting coating was allowed to stand for 3 minutes, and then preheated at 80°C for 3 minutes to form an intermediate coating film with a lightness L*45 of 80.
Subsequently, the colored base paint (X-3) was electrostatically applied to a dry film thickness of 10 $\mu$m using a Robot Bell (produced by ABB) at a booth temperature of 23°C and at a humidity of 68%, and allowed to stand for 3 minutes to form a colored base coating film.
Subsequently, the effect pigment dispersion (Y-14) prepared as described above was adjusted to the paint viscosity as shown in Table 1 and applied to the colored base coating film to a dry film thickness of 1.0 $\mu$m using a Robot Bell (produced by ABB) at a booth temperature of 23°C and at a humidity of 68%. The resulting coating was allowed to stand for 3 minutes, and then preheated at 80°C for 3 minutes to form an effect base coating film.
Further, the clear paint (Z-1) was applied to the effect base coating film to a dry film thickness of 35 $\mu$m using a Robot Bell (produced by ABB) at a booth temperature of 23°C and at a humidity of 68% to form a clear coating film.
After the coating, the resulting coated substrate was allowed to stand at room temperature for 7 minutes and then heated in a hot-air circulation drying oven at 140°C for 30 minutes to simultaneously dry the multilayer coating film, thus forming a test plate.
The appearance and performance of the coating film of each test plate obtained in the above manner were evaluated. Table 2 shows the results.

Evaluation Method

Calculation of X and Y

The chroma values C*15, C*25, C*45, C*75, and C*110 in the L*C*h* color space were calculated based on the spectral reflectance of light illuminated at an angle of 45 degrees with respect to the coating film and received at angles of 15 degrees, 25 degrees, 45 degrees, 75 degrees, and 110 degrees deviated from the specular reflection light. A multi-angle spectrophotometer (trade name: MA-68II, produced by X-Rite Inc.) was used for the measurement.
Further, the lightness values L*15, L*25, L*45, L*75, and L*110 in the L*a*b* color space were calculated based on the spectral reflectance of light illuminated at an angle of 45 degrees with respect to the coating film and received at angles of 15 degrees, 25 degrees, 45 degrees, 75 degrees, and 110 degrees deviated from the specular reflection light. A multi-angle spectrophotometer (trade name: MA-68II, produced by X-Rite Inc.) was used for the measurement.
X and Y were each determined according to the following formulas. Table 2 shows the values of X and Y in Examples 1 to 14 and Comparative Examples 1 and 2.

$$X = [(C^{*}45)^2 + (C^{*}75)^2]^{1/2},$$

$$Y = [(L^{*}15)^2 + (C^{*}15)^2]^{1/2} + [(L^{*}25)^2 + (C^{*}25)^2]^{1/2}.$$

Y5/Y15

The luminance value (Y5) in the XYZ color space was calculated based on the spectral reflectance of light illuminated at an angle of 45 degrees with respect to the coating film and received at an angle of 5 degrees deviated from the specular reflection light in the incident light direction using a GCMS-4 Goniometer (trade name, produced by Murakami Color Research Laboratory, Co., Ltd.). Further, the luminance value (Y15) in the XYZ color space was calculated based on the spectral reflectance of light illuminated at an angle of 45 degrees with respect to the coating film and received at an angle of 15 degrees deviated from the specular reflection light in the incident light direction. Then, (Y5/Y15) was calculated.

Measurement of Graininess HG Value

"HG value" is an abbreviation of the hi-light graininess value. The HG value is an indicator of microscopic brilliance obtained by the microscopic observation of a coating surface, and indicates the graininess in the highlight. The HG value is calculated as follows. First, the coating surface is photographed with a CCD camera at a light incidence angle of 15° and a receiving angle of 0°, and the obtained digital image data (two-dimensional luminance distribution data) is subjected to a two-dimensional Fourier transform to obtain a power spectrum image. Subsequently, only the spatial frequency area corresponding to graininess is extracted from the power spectrum image; and the obtained measurement parameter is converted to a numerical value from 0 to 100 that has a linear relation with graininess, thus obtaining an HG value. An HG value of 0 indicates no graininess of the effect pigment at all, and an HG value of 100 indicates the highest possible graininess of the effect pigment.

Measurement of Hue Angle h

Table 2 shows the hue angle h in the L*C*h color space diagram, calculated based on the spectral reflectance of light illuminated at 45 degrees with respect to the coating film and received at 45 degrees deviated from the specular reflection light in the incident light direction. A multi-angle spectrophotometer (trade name: MA-68II, produced by X-Rite Inc.) was used for the measurement.

Table 2

| | Example | | | | | | | | | | | | | | | Comparative Example | |
|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 1 | 2 |
| Name of colored base paint (X) | X-1 | X-2 | X-2 | X-2 | X-2 | X-2 | X-2 | X-2 | X-2 | X-2 | X-2 | X-2 | X-2 | X-2 | X-3 | X-4 | X-2 |
| Film thickness of colored base coating film ($\mu$m) | 25 | 10 | 10 | 10 | 10 | 10 | 10 | 10 | 10 | 10 | 10 | 10 | 10 | 10 | 10 | 25 | 10 |
| Name of effect base paint (Y) | Y-1 | Y-1 | Y-2 | Y-3 | Y-4 | Y-5 | Y-6 | Y-7 | Y-8 | Y-9 | Y-10 | Y-11 | Y-12 | Y-1 | Y-14 | Y-1 | Y-13 |
| Film thickness of effect base coating film ($\mu$m) | 0.5 | 0.5 | 0.8 | 1.0 | 1.0 | 1.0 | 0.9 | 0.8 | 0.5 | 0.5 | 1.4 | 0.6 | 1.0 | 0.5 | 1.0 | 0.5 | 0.6 |
| Name of clear paint (Z) | Z-1 | Z-1 | Z-1 | Z-1 | Z-1 | Z-1 | Z-1 | Z-1 | Z-1 | Z-1 | Z-1 | Z-1 | Z-1 | Z-2 | Z-1 | Z-1 | Z-1 |
| X value represented by formula 1 | 98 | 98 | 94 | 116 | 115 | 118 | 120 | 113 | 110 | 105 | 94 | 104 | 124 | 98 | 82 | 67 | 44 |
| Y value represented by formula 2 | 185 | 185.8 | 201 | 201.1 | 200 | 208.6 | 212.4 | 197.7 | 160.2 | 160.2 | 192 | 189.6 | 218.8 | 188 | 153.8 | 146 | 123 |
| Y5/Y15 | 5.4 | 5.4 | 4.4 | 4.0 | 4.0 | 3.9 | 3.8 | 4.6 | 7.3 | 8.6 | 2.7 | 4.0 | 3.6 | 5.5 | 4.5 | 3.2 | 3.9 |
| HG value | 32 | 32 | 49 | 41 | 40 | 43 | 46 | 32 | 14 | 38 | 46 | 34 | 32 | 32 | 52 | 34 | 28 |
| h value | 42 | 42 | 43 | 45 | 44 | 46 | 47 | 45 | 42 | 42 | 41 | 43 | 47 | 42 | 35.03 | 63 | 28 |

**Claims**

1. A multilayer coating film comprising a colored base coating film and an effect base coating film formed on the colored base coating film,

   wherein the hue angle h in the L*C*h color space diagram is within the range of 30° to 70°, and
   when the following formulas hold:

   $$X = [(C*45)^2 + (C*75)^2]^{1/2},$$

   and

   $$Y = [(L*15)^2 + (C*15)^2]^{1/2} + [(L*25)^2 + (C*25)^2]^{1/2},$$

   X is 80 or more and Y is 140 or more;
   provided that C*15, C*25, C*45, and C*75 represent the chroma of the multilayer coating film when light is illuminated at an angle of 45 degrees and received at angles of 15 degrees, 25 degrees, 45 degrees, and 75 degrees deviated from the specular reflection light in the incident light direction,
   h represents the hue of the multilayer coating film when light is illuminated at an angle of 45 degrees and received at an angle of 45 degrees deviated from the specular reflection light in the incident light direction, and
   L*15 and L*25 represent the lightness of the multilayer coating film when light is illuminated at an angle of 45 degrees and received at angles of 15 degrees and 25 degrees deviated from the specular reflection light in the incident light direction.

2. The multilayer coating film according to claim 1, which has a Y5/Y15 ratio of 2.4 or more, wherein Y5 is a Y value representing luminance in the XYZ color space based on the spectral reflectance of light illuminated at an angle of 45 degrees and received at an angle of 5 degrees deviated from the specular reflection light in the incident light direction, and Y15 is a Y value representing luminance in the XYZ color space based on the spectral reflectance of light received at an angle of 15 degrees in the incident light direction.

3. The multilayer coating film according to claim 1, wherein the measurement value of graininess (HG value) is 60 or less.

4. The multilayer coating film according to claim 1, wherein the effect base coating film comprises, as a solids content, 20 to 70 parts by mass of an interference pigment based on 100 parts by mass of the solids content of the effect base coating film.

5. The multilayer coating film according to claim 1, wherein the effect base coating film comprises, as a solids content, 15 parts by mass or less of a color pigment based on 100 parts by mass of the solids content of the effect base coating film.

6. The multilayer coating film according to claim 1, further comprising a clear coating film on the effect base coating film.

7. An object comprising the multilayer coating film according to claim 1.

8. A method for forming a multilayer coating film, comprising the following steps (1) to (3):

   (1) applying a colored base paint (X) to a substrate to form a colored base coating film;
   (2) applying an effect base paint (Y) to the colored base coating film to form an effect base coating film; and
   (3) heating the colored base coating film formed in step (1) and the effect base coating film formed in step (2) separately or simultaneously to cure the coating films, wherein in the multilayer coating film, the hue angle h in the L*C*h color space diagram is within the range of 30° to 70°, and

   when the following formulas hold:

   $$X = [(C*45)^2 + (C*75)^2]^{1/2},$$

and

$$Y = [(L*15)^2+(C*15)^2]^{1/2}+[(L*25)^2+(C*25)^2]^{1/2},$$

X is 80 or more and Y is 140 or more.

9. The method for forming a multilayer coating film according to claim 8, wherein the effect base paint (Y) comprises water, an interference pigment, a surface adjusting agent, and a rheology control agent.

10. The method for forming a multilayer coating film according to claim 8, wherein the effect base paint (Y) comprises, as a solids content, 20 to 70 parts by mass of an interference pigment based on 100 parts by mass of the solids content of the effect base paint.

11. The method for forming a multilayer coating film according to claim 8, wherein the effect base coating film has a dry film thickness of 0.2 to 4.5 $\mu$m.

Fig. 1

(2) Incidence: 45 degrees

(1) Specular reflection: 0 degrees

**INTERNATIONAL SEARCH REPORT**

| International application No. |
|---|
| PCT/JP2019/049589 |

A.  CLASSIFICATION OF SUBJECT MATTER
B05D 1/36(2006.01)i; B05D 5/06(2006.01)i; B32B 7/023(2019.01)i
FI: B32B7/023; B05D5/06 101A; B05D1/36 B

According to International Patent Classification (IPC) or to both national classification and IPC

B.  FIELDS SEARCHED

Minimum documentation searched (classification system followed by classification symbols)
B05D1/36; B05D5/06; B32B7/023

Documentation searched other than minimum documentation to the extent that such documents are included in the fields searched
Published examined utility model applications of Japan       1922-1996
Published unexamined utility model applications of Japan      1971-2020
Registered utility model specifications of Japan             1996-2020
Published registered utility model applications of Japan      1994-2020

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| Y | JP 2005-169385 A (KANSAI PAINT CO., LTD.) 30.06.2005 (2005-06-30) claims 1-4, 9, paragraphs [0013]-[0022], [0038], [0046], [0048], [0068], [0070], [0076], [0078] | 1-11 |
| Y | JP 2006-289247 A (NIPPON PAINT CO., LTD.) 26.10.2006 (2006-10-26) claims 1-3 | 1-11 |
| Y | JP 2011-20021 A (KANSAI PAINT CO., LTD.) 03.02.2011 (2011-02-03) claims 1, 5 | 1-11 |
| A | WO 2017/175468 A1 (KANSAI PAINT CO., LTD.) 12.10.2017 (2017-10-12) entire text | 1-11 |
| A | JP 2000-000514 A (KANSAI PAINT CO., LTD.) 07.01.2000 (2000-01-07) entire text | 1-11 |
| A | JP 2013-169507 A (KANSAI PAINT CO., LTD.) 02.09.2013 (2013-09-02) entire text | 1-11 |

☐  Further documents are listed in the continuation of Box C.      ☒  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 05 March 2020 (05.03.2020) | 17 March 2020 (17.03.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

| Patent Documents referred in the Report | Publication Date | Patent Family | Publication Date |
|---|---|---|---|
| JP 2005-169385 A | 30 Jun. 2005 | US 2005/0208292 A1 claims 1.-4.9., paragraphs [0013]-[0022], [0038], [0047], [0049], [0072], [0074], [0082], [0087] KR 10-2005-0047475 A | |
| JP 2006-289247 A | 26 Oct. 2006 | (Family: none) | |
| JP 2011-20021 A | 03 Feb. 2011 | (Family: none) | |
| WO 2017/175468 A1 | 12 Oct. 2017 | EP 3441436 A1 whole document CA 3019766 A CN 109071987 A | |
| JP 2000-000514 A | 07 Jan. 2000 | (Family: none) | |
| JP 2013-169507 A | 02 Sep. 2013 | (Family: none) | |

Form PCT/ISA/210 (patent family annex) (January 2015)

**EP 3 919 186 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019016589 A
- JP 2019097385 A
- JP 2006289247 A